(19) Europäisches Patentamt / European Patent Office / Office européen des brevets

(11) **EP 2 548 337 B1**

(12) **FASCICULE DE BREVET EUROPEEN**

(45) Date de publication et mention
de la délivrance du brevet:
**17.06.2015 Bulletin 2015/25**

(21) Numéro de dépôt: **11721809.9**

(22) Date de dépôt: **17.03.2011**

(51) Int Cl.:
*H04L 12/24* (2006.01)   *H04L 29/06* (2006.01)
*H04L 12/26* (2006.01)

(86) Numéro de dépôt international:
**PCT/FR2011/050541**

(87) Numéro de publication internationale:
**WO 2011/114060 (22.09.2011 Gazette 2011/38)**

(54) **PROCÉDÉ D'IDENTIFICATION D'UN PROTOCOLE À L'ORIGINE D'UN FLUX DE DONNÉES**

VERFAHREN ZUR IDENTIFIZIERUNG EINES PROTOKOLLS FÜR DIE AUSLÖSUNG EINES DATENFLUSSES

METHOD OF IDENTIFYING A PROTOCOL GIVING RISE TO A DATA FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2010 FR 1001062**

(43) Date de publication de la demande:
**23.01.2013 Bulletin 2013/04**

(73) Titulaire: **THALES**
**92200 Neuilly-sur-Seine (FR)**

(72) Inventeurs:
- **DUBOIS, Renaud**
  **F-92704 Colombes Cedex (FR)**
- **MOREL, Mathieu**
  **F-75014 Paris (FR)**
- **GOMPEL, Paul**
  **F-92100 Boulogne (FR)**

(74) Mandataire: **Domenego, Bertrand**
**Cabinet Lavoix**
**2, place d'Estienne d'Orves**
**75441 Paris Cedex 09 (FR)**

(56) Documents cités:
- **MAHBOD TAVALLAEE ET AL: "Online Classification of Network Flows", COMMUNICATION NETWORKS AND SERVICES RESEARCH CONFERENCE, 2009. CNSR '09. SEVENTH ANNUAL, IEEE, PISCATAWAY, NJ, USA, 11 mai 2009 (2009-05-11), pages 78-85, XP031456646, ISBN: 978-1-4244-4155-6**
- **DUSI M ET AL: "Using GMM and SVM-Based Techniques for the Classification of SSH-Encrypted Traffic", COMMUNICATIONS, 2009. ICC '09. IEEE INTERNATIONAL CONFERENCE ON, IEEE, PISCATAWAY, NJ, USA, 14 juin 2009 (2009-06-14), pages 1-6, XP031506531, ISBN: 978-1-4244-3435-0**
- **JUN LI, SHUNYI ZHANG, CUILIAN LI, JUNRONG YAN: "Composite lightweight traffic classification system for network management", INTERNATIONAL JOURNAL OF NETWORK MANAGEMENT, vol. 20, no. 2, 22 février 2010 (2010-02-22), pages 85-105, XP002617616, Wiley InterScience DOI: 10.1002/nem.735**

**Description**

La présente invention concerne un procédé d'identification d'un protocole à l'origine d'un flux de données du type comportant les étapes suivantes :

- une capture du flux du protocole à identifier,
- une classification statistique du flux, comprenant une extraction des paramètres de classification et une comparaison des paramètres de classification à des modèles statistiques construits lors d'une phase d'apprentissage.

Dans le domaine de la sécurité des systèmes d'information, la maîtrise des flux entrants et sortants d'un réseau de défense ou d'une entreprise est cruciale. Le contrôle de ces flux s'effectue généralement au niveau d'un équipement passerelle, situé à la frontière entre le réseau local et le monde extérieur c'est-à-dire le réseau Internet. L'objectif d'un tel contrôle est de s'assurer de la conformité des flux traversants à la politique de sécurité de l'entreprise. Cette politique peut consister, par exemple, à autoriser uniquement la navigation web, tout en interdisant les échanges de fichiers de type FTP ou pairs à pairs (P2P) avec l'extérieur, ainsi que toute connexion directe à des serveurs distants SMTP, SSH ou autres.

De nombreux outils ont été développés pour assurer le respect de ces politiques de sécurité. Les méthodes qu'ils utilisent peuvent être classées en trois grandes catégories :

- filtrage de niveau réseau et transport par analyse protocolaire (*pare-feux*) ;
- filtrage par analyse du contenu des données applicatives du flux (serveurs mandataires) ; et
- analyse comportementale élémentaire pour identifier les comportements suspects (*IDS ou IDPS comportementaux*).

L'ensemble de ces protections peut cependant être contourné par un utilisateur du réseau local, en utilisant un tunnel applicatif avec un serveur distant maîtrisé.

Cette méthode consiste à encapsuler les données applicatives d'un protocole interdit à l'intérieur de trames d'un protocole autorisé à traverser la passerelle. Le serveur maîtrisé distant, contrôlé par l'utilisateur, extrait les trames encapsulées et les relaie vers leur véritable destination.

Le protocole le plus utilisé pour établir ce genre de tunnels est le protocole HTTP, car ce dernier est quasiment toujours autorisé par les passerelles. Ainsi, le logiciel GNU httptunnel, http//www.nocrew.org/software/httptunnel.html, Lars Brinkhoff permet d'encapsuler les trames d'un protocole quelconque (SSH ou P2P par exemple) dans des requêtes HTTP. Les données utiles sont camouflées dans certains champs de la requête, à l'aide de techniques proches de celles de la stéganographie.

De manière similaire, le logiciel Stunnel universal SSL wrapper, http//www.stunnel.org/ permet d'encapsuler la plupart des protocoles dans une connexion SSL/TLS, sur le port 443. Les flux résultant sont donc identifiés par les outils de filtrage comme des flux HTTPs légitimes.

Si l'on peut espérer qu'un serveur mandataire perfectionné détecte une anomalie dans les requêtes HTTP générées par *HTTPTunnel,* les flux générés par *Stunnel* sont quant à eux chiffrés, ce qui empêche toute inspection du contenu des paquets.

Une approche pour identifier le flux indésirable circulant dans un tel tunnel est de déterminer le protocole à l'origine d'un flux de données (i.e. le protocole encapsulé dans le cas d'un tunnel), en utilisant un petit nombre de paramètres difficilement falsifiables par un attaquant. Une fois ce protocole identifié, on peut appliquer la politique de sécurité du réseau local pour décider du filtrage ou non du flux.

Pour détecter la présence de tunnels illégitimes, l'utilisation des numéros de port s'avère inutile, et l'inspection approfondie du contenu des paquets est souvent source d'erreurs, les concepteurs des logiciels de tunneling étant particulièrement inventifs lorsqu'il s'agit de cacher des données dans un flux légitime, voire impossible si le flux est chiffré comme dans le cas des tunnels HTTPs.

Les méthodes présentées ci-dessous utilisent des outils statistiques pour exploiter les informations résiduelles sur les flux après chiffrement ou encapsulation dans un autre protocole. En particulier, on cherche à identifier une empreinte statistique inhérente à chaque protocole à partir d'un nombre réduit de paramètres.

Pour qu'une méthode de classification de flux statistiques soit utilisable, il est nécessaire de faire deux hypothèses :

- chaque protocole ou classe de protocole (HTTP, SSH, P2P, VoIP, ...) induit un comportement caractéristique en termes de paquets de données générés, tant pour la taille de ces paquets que pour les temps inter-paquets. Par exemple, un flux SSH sera composé majoritairement de « petits » paquets échangés dans les deux sens (les frappes au clavier, puis leurs réponses « echo »), tandis qu'un flux HTTP typique consistera en une requête de taille moyenne, suivi de la réponse du serveur sur plusieurs paquets de grandes tailles ; et

- l'encapsulation d'un protocole dans un tunnel HTTP/HTTPs ou similaire ne modifie pas notablement son comportement caractéristique (ou du moins les comportements des différents protocoles encapsulés restent distincts).

L'utilisation de méthodes de classification statistique pour identifier le protocole à l'origine d'un flux est décrite dans la littérature où différentes méthodes sont étudiées. En particulier dans N. Williams, S. Zander and G. Armitage, A preliminary performance comparison of five machine learning algorithms for practical IP traffic flow classification, ACM SIGICOMM'06, 2006.

L'article présente une synthèse comparative de plusieurs méthodes de classification appliquées à la classification de flux de données. Williams montre que parmi de nombreux algorithmes (méthode de Bayes, réseaux bayésiens, C4.5, arbres de Bayes, SVM, etc.), les plus performants sont les SVM et C4.5.

Le document WO 2009/021892 A1 décrit un procédé et une installation de classification de trafics dans les réseaux IP. L'invention qui y est décrite met en oeuvre une méthode statistique basée sur un arbre de décision (algorithme C4.5) pour déterminer le protocole à l'origine d'un flux chiffré.

MAHBOD TAVALLAEE ET AL: "Online Classification of Network Flows", COMMUNICATION NETWORKS AND SERVICES RESEARCH CONFERENCE, 2009. CNSR '09. SEVENTH ANNUAL, IEEE, PISCATAWAY, NJ, USA, 11 mai 2009 (2009-05-11), pages 78-85, décrit une méthode de classification de flux de paquets mettant en oeuvre plusieurs niveaux de classification.

DUSI M ET AL: "Using GMM and SVM-Based Techniques for the Classification of SSH-Encrypted Traffic", COMMUNICATIONS, 2009. ICC '09. IEEE INTERNATIONAL CONFERENCE ON, IEEE, PISCATAWAY, NJ, USA, 14 juin 2009 (2009-06-14), pages 1-6, décrit deux procédés de classification de flux chiffrés.

Toutes ces méthodes sont efficaces mais produisent un nombre important de faux positifs, c'est-à-dire de clarification de flux connue interdit alors qu'ils sont autorisés.

L'invention a pour but de proposer une méthode de classification qui permette de réduire le nombre de faux positif.

A cet effet, l'invention a pour objet un procédé d'identification d'un protocole à l'origine d'un flux de données du type précité, caractérisé en ce que la classification statistique comporte :

- une première phase de classification statistique globale comprenant une étape d'extraction de paramètres globaux de classification calculés par application de formules statistiques sur une partie ou l'intégralité du flux, et une étape de traitement des paramètres globaux de classification à partir d'un modèle statistique construit lors d'une phase d'apprentissage ;
- une seconde phase de classification séquentielle comprenant une étape d'extraction de paramètres séquentiels de classification représentatifs de l'enchaînement temporel de paquets constituant le flux, et une étape de traitement des paramètres séquentiels de classification à partir d'un modèle statistique construit lors d'une phase d'apprentissage ; et
- une étape de synthèse des résultats des première et seconde phases de classification pour identifier le protocole à l'origine du flux.

Suivant un mode particulier de mise en oeuvre, le procédé comporte l'une ou plusieurs des caractéristiques suivantes :

- l'étape de traitement des paramètres globaux de classification à partir de modèles statistiques construits lors d'une phase d'apprentissage comprend la mise en oeuvre de l'algorithme Ramdom Forest ;
- les paramètres globaux de classification comportent au moins un paramètre parmi :

  - le nombre de paquets transmis, sens client->serveur ;
  - le nombre d'octets transmis, sens client->serveur;
  - la taille moyenne des paquets IP, sens client->serveur ;
  - la taille maximale des paquets IP, sens client->serveur ;
  - le temps d'inter arrivées minimum entre deux paquets IP, sens client→serveur ;
  - le temps d'inter arrivées maximum entre deux paquets IP, sens client→serveur ;
  - le nombre d'octets transmis, sens serveur->client ;
  - la taille maximale des paquets IP, sens serveur->client ;
  - la variance de la taille des paquets IP, sens serveur->client ; et
  - le ratio nombre octets montants/nombre total octets échangés ;

- l'étape de traitement des paramètres séquentiels de classification à partir de modèles statistiques construits lors d'une phase d'apprentissage comprend la mise en oeuvre de modèles de Markov Caché ;

- la phase d'apprentissage comporte une étape de construction d'un modèle de Markov caché pour chaque protocole identifiable et l'étape de traitement comporte la détermination du modèle de Markov caché dont la probabilité que le flux ait été émis par le protocole associé est la plus grande ;
- les paramètres séquentiels de classification comprennent au moins un paramètre parmi la taille du paquet et le temps inter-paquets ;
- l'étape de synthèse des résultats comprend l'application de la formule de Bayes pour fournir la probabilité de l'existence d'un protocole

$$p''_i = \frac{\sum_{k=1}^{n} p_k\, p(i\,|\,k) + \sum_{k=1}^{n} p'_k\, p'(i\,|\,k)}{2}$$

où

étant donné un flux F et un ensemble de protocoles possibles $[a_1...a_n]$, $p_i$ et $p'_i$ représentent respectivement la probabilité que F appartienne au protocole $a_i$ selon la méthode *RandomForest* mise en oeuvre dans la phase et selon la méthode du banc de modèles de Markov cachés mise en oeuvre dans la phase,

- $p''_i$ est la probabilité fusionnée que F appartienne au protocole $a_i$ ;

- $p(i/k)$ (respectivement $p'(i/k)$) est la probabilité que le flux appartienne au protocole $a_i$ sachant que la première phase de classification, respectivement la seconde phase de classification, a classé le flux comme appartenant au protocole $a_k$ ;

- le procédé comporte, à l'issue de l'étape de synthèse, une étape de filtrage supplémentaire ;
- l'étape de filtrage comprend la prise en compte de l'historique des résultats suivant une heuristique prédéterminée.

L'invention a également pour objet une installation d'identification d'un protocole à l'origine d'un flux de paquets tel que décrit ci-dessus, caractérisée en ce que les moyens de classification statistique comportent :

- des premiers moyens de classification statistique globale comprenant des moyens d'extraction de paramètres globaux de classification calculés par application de formule statistique sur une partie ou l'intégralité du flux, et des moyens de traitement des paramètres globaux de classification à partir d'un modèle statistique construit lors d'une phase d'apprentissage ;
- des seconds moyens de classification séquentielle comprenant des moyens d'extraction de paramètres séquentiels de classification représentatifs de l'enchaînement temporel de paquets constituant le flux, et des moyens de traitement des paramètres séquentiels de classification à partir d'un modèle statistique construit lors d'une phase d'apprentissage ; et
- des moyens de synthèse des résultats des premiers et seconds moyens de classification pour identifier le protocole à l'origine du flux.

L'invention sera mieux comprise à la lecture de la description qui va suivre, donnée uniquement à titre d'exemple et faite en se référant au dessin sur lequel :

- la figure 1 est une vue schématique d'une installation dans laquelle est mis en oeuvre le procédé selon l'invention ;
- la figure 2 est un organigramme du procédé selon l'invention ;
- la figure 3 est un schéma d'un arbre tel que mis en oeuvre par une phase du procédé ; et
- la figure 4 est un schéma d'un graphe mis en oeuvre dans une autre phase du procédé selon l'invention.

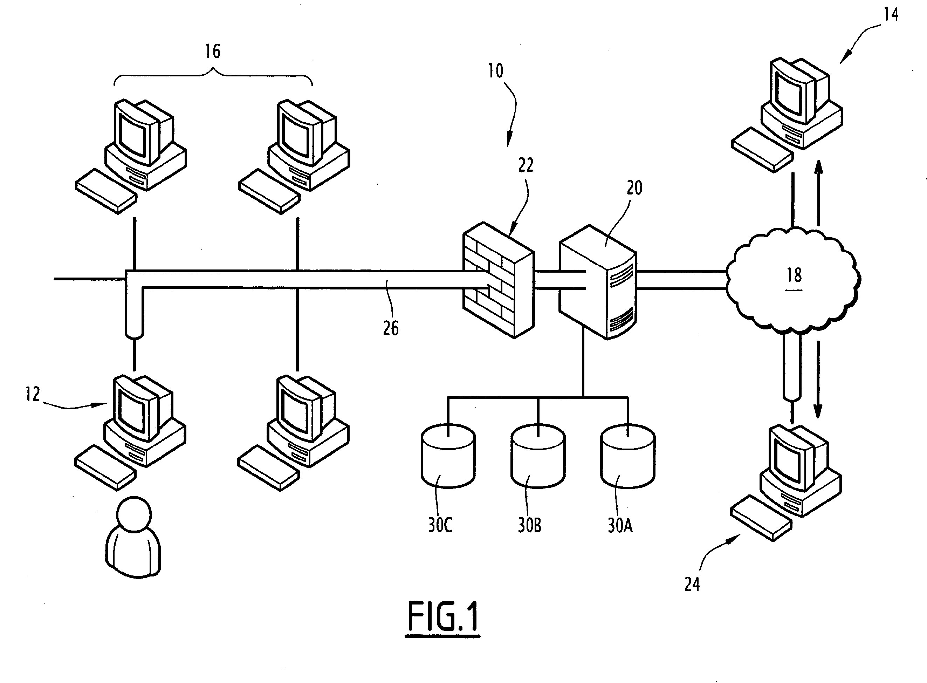

Sur la figure 1 est représenté un schéma typique d'une communication établissant un tunnel entre un poste local 12 et un serveur distant 14. Le poste local 12 fait partie d'un réseau local 16 par exemple d'une entreprise dont les postes sont interconnectés entre eux et reliés au réseau Internet 18 au travers d'une passerelle 20.

Cette passerelle intègre un pare-feu 22 qui, comme connu en soi, est propre à assurer la gestion et l'autorisation des flux entrants et sortants du réseau local 16.

Comme connu en soi, la passerelle 20 comporte des premiers moyens de filtrage interdisant la transmission de données depuis le réseau Internet 18 vers l'un des postes du réseau local 16 lorsque cette transmission utilise un certain nombre de protocoles interdits, tels que le protocole SSH ou P2P. En revanche, la passerelle 20 autorise la navigation « Web » en autorisant le trafic suivant le protocole http ou https.

Pour l'établissement du tunnel, un serveur maîtrisé 24 est présent sur le réseau Internet 18 en dehors du réseau local 16 isolé par la passerelle 20 et le pare-feu 22 du réseau Internet 18.

Comme connu en soi, le poste 12 comporte des moyens logiciels pour établir un tunnel logiciel 26 entre le poste 12 et le serveur maîtrisé 24. Ce tunnel logiciel est propre à encapsuler les données applicatives d'un protocole interdit par la passerelle 20 à l'intérieur de trames d'un autre protocole autorisé par cette passerelle. A cet effet, les données applicatives requises par le poste 12 auprès du serveur distant 14 sont véhiculées du serveur distant 14 vers le serveur maîtrisé 24 suivant le protocole interdit, puis le serveur maîtrisé 24 assure une encapsulation des données applicatives à l'intérieur de trames d'un autre protocole autorisé par la passerelle 24 et enfin ces données sont adressées au poste 12 en utilisant ce protocole autorisé par le serveur 24.

Le protocole autorisé est par exemple le protocole http alors que les trames applicatives encapsulées dans ce protocole sont transmises du serveur 14 au serveur 24 par le protocole SSH ou P2P.

De même, les données applicatives adressées du poste 12 au serveur 14 sont transmises au travers du serveur maîtrisé 24 où les données sont désencapsulées suivant un processus inverse à celui décrit précédemment.

Selon l'invention, la passerelle 20 comporte, en plus des premiers moyens de filtrage, des moyens d'analyse du protocole à l'origine d'un flux de données lorsque ces données sont encapsulées dans un protocole autorisé par la passerelle 20.

Ainsi, la passerelle 20 comporte deux moyens de filtrage successifs des flux, un premier filtrage interdisant les échanges de données en utilisant un protocole interdit entre un poste du réseau local et l'Internet, puis un second moyen de filtrage interdisant les transmissions de données entre le réseau Internet et un poste avec un protocole autorisé dans le cas où les données applicatives encapsulées à l'intérieur des trames du protocole autorisé sont issues d'un protocole interdit.

Pour la mise en oeuvre de ce deuxième filtrage, la passerelle 20 comporte des moyens de stockage 30A d'un logiciel mettant en oeuvre les étapes successives du procédé d'analyse, une base de données 30B contenant des données issues d'un apprentissage préalable utilisé par le procédé et une base de données 30C de stockage temporaire des flux en cours de traitement, par exemple de type MySQL.

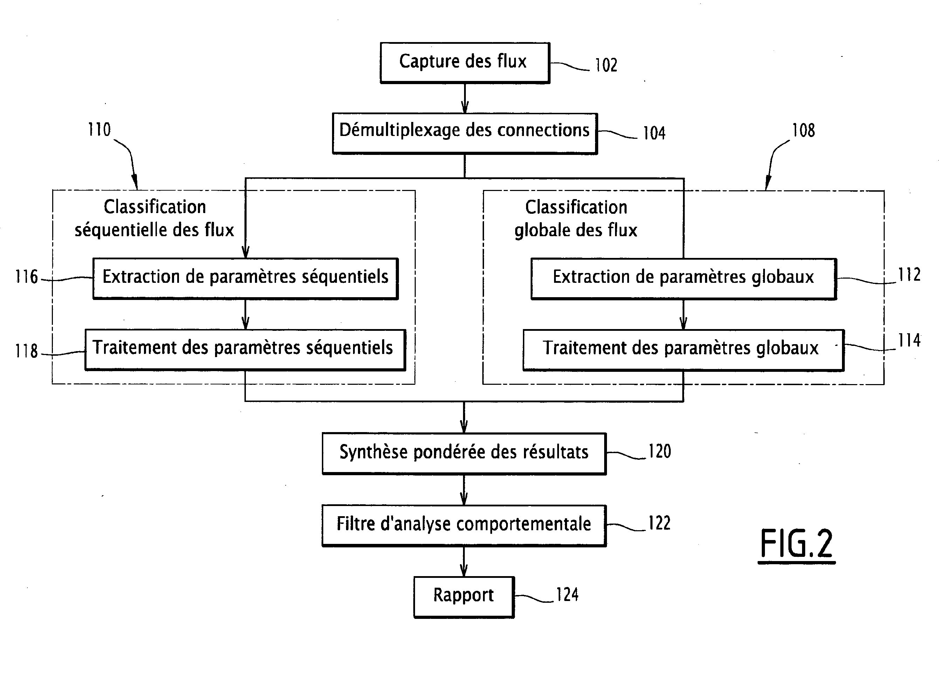

La figure 2 présente l'organigramme du procédé mis en oeuvre.

Constamment, une écoute du réseau s'effectue à l'étape 102 à l'aide d'un programme connu en soi tel que Tcpdump/Libpcam disponible sur http://ww.tcpdump.org/. Cette étape assure l'interception des différents flux multiplexés et leur stockage temporaire dans la base 30C.

A l'étape 104, le démultiplexage des différents flux interceptés est ensuite effectué par tout moyen approprié et par exemple par des scripts *perl.*

Deux phases 108, 110 de classification du flux de données sont mises en oeuvre sur chacun des flux démultiplexés.

La première phase 108 de classification est dite globale en ce sens qu'elle comprend une étape 112 d'extraction de paramètres globaux de classification calculés par une analyse statistique sur une partie ou l'intégralité du flux, et une étape 114 de traitement des paramètres globaux de classification à partir de modèles statistiques construits lors d'une phase préalable d'apprentissage

La seconde phase 110 de classification statistique est dite séquentielle en ce sens qu'elle comprend une étape 116 d'extraction de paramètres séquentiels de classification représentatifs de l'enchaînement temporel de paquets successifs constituant le flux, et une étape 118 de traitement des paramètres séquentiels de classification à partir de modèles statistiques construits lors d'une phase préalable d'apprentissage,

Ces paramètres extraits aux étapes112 et 116 ainsi que quelques informations élémentaires sur chaque flux (*timestamp,* adresses IP source et destination, etc.) sont stockés dans la base de données 30C.

Les outils de traitement proprement dits mettant en oeuvre les étapes de traitements 114, 118 sont développés en Java, ou tout autre langage adapté. Les résultats de classification sont également stockés dans la base de données 30C.

A l'étape 112, des paramètres globaux calculés par une analyse statistique sur une partie ou l'intégralité du flux (par exemple, la taille moyenne des paquets, etc.) sont extraits pour chaque flux. Les paramètres globaux sont le résultat de traitements statistiques effectués sur les valeurs élémentaires de ces paramètres relevés sur chacun des paquets constituant la partie du flux analysé. Il s'agit par exemple de moyennnes d'écarts type, de variances, etc...

Ces paramètres sont choisis pour être évaluables quel que soit le flux TCP considéré.

Ils sont déduits des données contenues dans les couches 1 à 4 du modèle OSI.

De plus, pour rendre le contournement du système plus ardu, les paramètres sont choisis coûteux à modifier pour un attaquant. Par exemple, les *flags* TCP ne sont pas considérés. Seuls les paramètres dérivés des tailles des paquets et des temps inter-paquets sont extraits. Il s'agit par exemple de la taille moyenne des paquets client vers serveur, de la variance des temps inter-paquets, etc.

Dans la présente demande, le terme « paquet » s'entend à titre d'exemple au sens de « paquet TCP transportant des données applicatives ». Toutefois, le procédé n'est pas limité au cas des protocoles utilisant la pile TCP/IP et le procédé peut être mis en oeuvre quel que soit le mode de transmission.

Parmi tous les paramètres envisageables, seuls entre 5 et 15 paramètres, de préférence une dizaine, sont retenus pour assurer la rapidité de la classification ultérieure. Ces paramètres sont choisis comme étant les plus discriminants vis à vis du protocole à l'origine du flux, c'est-à-dire comme un sous-ensemble de paramètres avec un pouvoir discriminant maximal, tout en gardant une faible valeur d'intra corrélation.

En d'autres termes, ces paramètres sont tels qu'ils dépendent fortement du protocole du flux, tout en étant très peu liés entre eux. Cette dernière condition sert à ne pas sur-pondérer certains paramètres lors de la classification.

Ceux-ci sont avantageusement, pour la phase 108, tout ou partie des paramètres suivants :

- le nombre de paquets transmis, sens client→serveur ;

- le nombre d'octets transmis, sens client→serveur;

- la taille moyenne des paquets IP, sens client->serveur ;

- la taille maximale des paquets IP, sens client->serveur ;

- le temps d'inter arrivées minimum entre deux paquets IP, sens client->serveur ;

- le temps d'inter arrivées maximum entre deux paquets IP, sens client->serveur ;

- le nombre d'octets transmis, sens serveur->client ;

- la taille maximale des paquets IP, sens serveur→client ;

- la variance de la taille des paquets IP, sens serveur→client ;

- le ratio nombre octets montants/nombre total octets échangés.

L'étape de traitement de paramètres globaux 114 met avantageusement en oeuvre l'algorithme *RandomForest* appliqué sur les dix paramètres pour classer chaque flux.

Cet algorithme a été inventé par Leo Breiman et Adele Cutler en 2001, et est décrit en détails dans L. Breiman, Random Forests, Machine Learning 45 (1) : 5-32, 2001.

L'algorithme *RandomForest* consiste en une forêt d'arbres de décisions aléatoires.

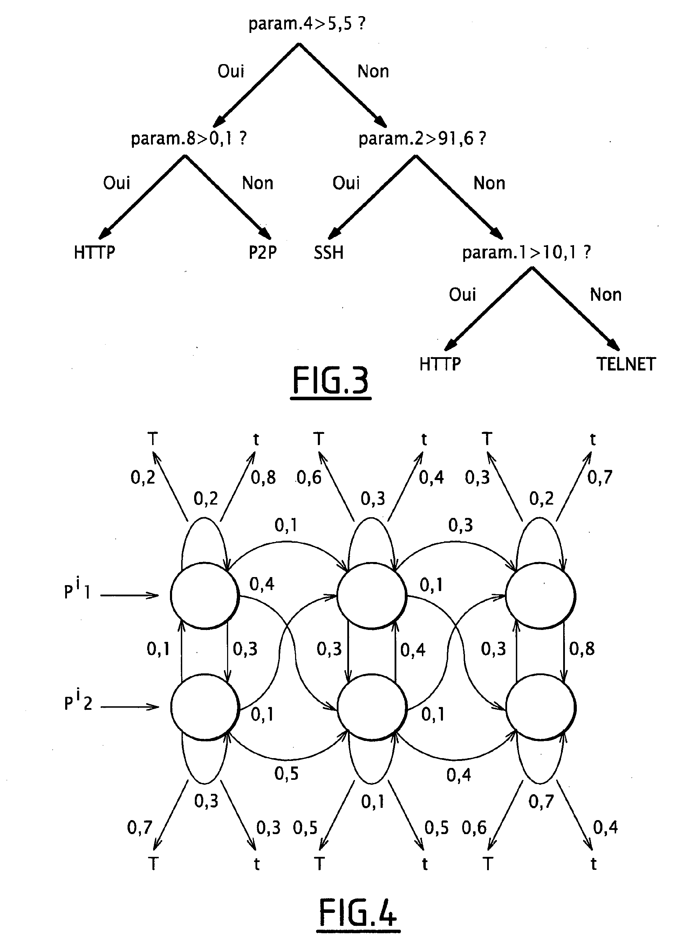

Un exemple d'arbre de décision est présenté dans la figure 3. Chaque noeud d'un tel arbre représente un test sur un des paramètres, notés ici, parami 4, parami 8, parami 2 et parami 1 par rapport à une valeur discriminante, ici 5,5 ; 0,1 ; 91,6 et 10,1. Chaque feuille de l'arbre représente un protocole ici, HTTP, P2P, SSH, HTTP et TELNET.

Pour classer un flux donné, l'arbre est parcouru, à partir de la racine, en descendant dans les branches selon les résultats des tests. La feuille à laquelle on arrive est le résultat de la classification.

Toute la difficulté de l'emploi d'arbres de décision réside dans la construction de ces arbres. Celle-ci s'effectue à partir de la base d'apprentissage, en utilisant un algorithme qui détermine récursivement, pour chaque noeud, le meilleur paramètre à considérer et la valeur discriminante la plus pertinente pour ce paramètre. Ce faisant, on cherche à minimiser l'entropie interclasses résultant de la séparation suivant cette valeur.

L'algorithme *RandomForest* consiste à utiliser non pas un mais plusieurs arbres, une vingtaine en pratique, en introduisant un aléa différent lors de l'apprentissage pour chaque arbre de telle sorte que tous les arbres soient différents. Cet aléa concerne le choix du paramètre à tester pour chacun des noeuds.

Pour déterminer le protocole encapsulé dans un flux, le flux est classé par chacun des arbres de la forêt. Le pourcentage d'arbres ayant conduit à chacun des protocoles possibles est interprété comme la probabilité que le flux appartienne à ce protocole. En particulier, le protocole choisi par une majorité d'arbres constitue le résultat de la classification et de l'étape 114.

La méthode de classification des flux décrite précédemment donne de bons résultats. Cependant, elle utilise exclusivement les dix paramètres globaux précédemment cités pour classer les flux. En particulier, toute l'information concernant les enchaînements temporels de paquets est perdue, puisque ces paramètres sont des moyennes, variances, valeur minimale ou maximale, calculés sur l'ensemble du flux. Or, la « signature » d'un protocole se retrouve également dans le déroulement temporel des échanges de données et notamment dans l'enchaînement temporel de paquets.

Ainsi, une frappe de touche dans le protocole SSH sera presque systématiquement suivie d'un paquet « echo » du serveur. En revanche, avec le protocole HTTP, une requête du client sera suivie de plusieurs paquets envoyés par le serveur, etc.

Pour exploiter ces informations temporelles perdues par l'algorithme *RandomForest,* la phase 110 de classification séquentielle des flux met en oeuvre une autre méthode d'analyse statistique des flux, qui repose sur des modèles de Markov cachés (HMM).

La plupart des protocoles courants sont gérés par un automate à état sous-jacent notamment pour des enchaînements du type : établissement de la connexion, échange de paramètres, régime « permanent », fermeture de la connexion. De plus, à chaque état de cet automate correspond des échanges de paquets particuliers.

L'utilisation de modèles de Markov cachés pour représenter les protocoles est donc appropriée. En pratique, on utilise un banc de modèles de Markov caché, c'est à dire que l'on construit un modèle de Markov caché pour représenter chaque protocole. Les symboles observables sont les paires [taille du paquet, temps inter-paquets].

Etant donné que les tailles des paquets et les temps inter-paquets peuvent prendre un grand nombre de valeurs, on effectue une quantification vectorielle de ces paramètres pour les discrétiser. Pour ce faire, on utilise les paquets des flux d'une base d'apprentissage, et on détermine les centroïdes de quantification en utilisant l'algorithme *K-means.* L'initialisation de ce dernier se fait en tirant aléatoirement des points dans une boule autour du centre de gravité. Les paquets client->serveur et serveur->client sont quantifiés de manière indépendante (l'algorithme *K-means* est effectué deux fois).

Un exemple de modèle de Markov caché simple est représenté sur la figure 4. Ce modèle est ainsi constitué d'un ensemble d'états, dont un ou plusieurs états initiaux. Pour chaque état, un ensemble de transitions vers d'autres états est possible, chaque transition étant pondérée par une probabilité. Au cours du temps, on se déplace donc dans les états de Markov cachés.

Les modèles de Markov cachés considérés sont dits « cachés », car la succession des états dans lesquels on se trouve n'est pas observable. En revanche, on observe une suite de symboles, émis lors des changements d'états successifs. Ainsi, à un modèle de Markov caché est associé un alphabet A, et à chaque état de ce modèle de Markov caché correspond une distribution de probabilités d'émission des symboles de A. Sur la figure ci-dessous, l'alphabet est {T,t} avec T = taille du paquet et t = temps inter-paquets.

Il existe plusieurs types de problèmes classiques pour les modèles de Markov cachés :

- étant donné un modèle de Markov caché et une séquence d'observation (i.e. une suite de symboles de A), quelle est la séquence d'états cachée la plus probable correspondante ?

- étant donné un modèle de Markov caché et une séquence d'observation, quelle est la probabilité que ce modèle de Markov caché ait produit cette séquence d'observations ?

- étant donné le squelette d'un modèle de Markov caché et un ensemble de séquences d'observations, quelles sont les probabilités de transition et d'émission qui maximisent la probabilité que ce modèle de Markov caché ait émis cet ensemble de séquences ?

On résout les deux premiers problèmes à l'aide de l'algorithme de Viterbi, et le troisième avec celui de Baum-Welsh. De plus amples informations sur ces algorithmes sont données dans L.R. Rabiner, A turorial on Hidden Markov Models and selected applications in speech recognition, Proceedings of the IEEE 77 (2) : 257-286, 1989.

Le « squelette » des modèles de Markov cachés que l'on utilise pour chaque protocole est représenté sur la figure 4. Il comprend deux « lignes » d'états. Les états de la ligne supérieure ne peuvent émettre que des paquets dans le sens client->serveur, tandis que les états de la ligne inférieure ne peuvent émettre que des paquets dans le sens serveur->client.

En faisant l'hypothèse qu'un protocole est constitué d'une succession d' « états » pour lesquels les probabilités d'émission de paquets [taille de paquet, temps inter-paquets] sont constantes, chaque « colonne » des modèles de Markov cachés utilisés représente un état protocolaire, et on autorise uniquement les transitions « vers la droite ».

Chaque modèle de Markov caché possède en outre deux états initiaux $P_1^i$, $P_2^i$ situés sur la première colonne.

Etant donné les squelettes des modèles de Markov cachés précédents, toutes les probabilités de transition et d'émissions de symboles sont calculées en utilisant la base de donnés d'apprentissage, en appliquant l'algorithme de Baum-Welsh. L'initialisation de cet algorithme se fait à partir d'un modèle de Markov caché dont les probabilités sont uniformes.

Un modèle de Markov caché est construit pour chaque protocole que l'on souhaite savoir reconnaître. La probabilité qu'un flux appartienne au protocole i est donnée par la probabilité que ce flux ait été produit par le i[ème] modèle de Markov caché. Cette dernière est calculée par l'algorithme de Viterbi. Pour classer un flux, on cherche donc quel modèle de Markov caché donne la plus grande probabilité d'émission pour ce flux.

En pratique, on utilise les modèles de Markov cachés ci-dessous avec 6 ou 8 états, et on utilise un dictionnaire de quantification de 20 à 30 vecteurs.

Les deux phases de classification parallèles 108, 110 permettent chacune de déterminer la probabilité qu'un flux donné appartienne à chacun des protocoles possibles. A l'étape 120, les probabilités renvoyées par chacune des phases 108 et 110 sont combinées pour en déduire un résultat final de classification et un indice de confiance sur ce résultat.

Etant donné un flux F et un ensemble de protocoles possibles $[a_1...a_n]$, on dispose des deux vecteurs de probabilités $[p_1...p_n]$ et $[p'_1...p'_n]$, où $p_i$ et $p'_i$ représentent respectivement la probabilité que F appartienne au protocole $a_i$ selon la méthode *RandomForest* mise en oeuvre dans la phase 108 et selon la méthode du banc de modèles de Markov cachés mise en oeuvre dans la phase 110.

Les résultats de classification des deux méthodes sont synthétisés à l'étape 120 par la formule de Bayes :

$$p''_i = \frac{\sum_{k=1}^{n} p_k\, p(i\,|\,k) + \sum_{k=1}^{n} p'_k\; p'(i\,|\,k)}{2}$$

où

- $p''_i$ est la probabilité fusionnée que F appartienne au protocole $a_i$ ;
- $p(i/k)$ (respectivement $p'(i/k)$ est la probabilité que le flux appartienne au protocole $a_i$ sachant que la méthode RandomForest (respectivement la méthode du banc de modèles de Markov cachés) a classé le flux comme appartenant au protocole $a_k$. Ces probabilités sont estimées par des manipulations sur la base de données d'apprentissage.

L'étape 120 engendre en sortie un vecteur de probabilité $[p''_1...p''_n]$. Le résultat de classification global est donc donné par $argmax_i(p''_i)$, où max est la fonction argument maximal. L'indice de confiance associé est $p''_{imax}$.

Ces valeurs sont sauvegardées pour chaque flux ainsi que l'hôte à l'origine de l'émission et/ou de récepteur de ce flux de données.

Afin de limiter encore le nombre de faux positifs, un moule d'intelligence artificielle de filtrage est appliqué à l'étape 122. Suivant un premier mode de mise en oeuvre, le moule comprend des heuristiques obtenues par des mesures expérimentales sur le réseau sur lequel est installé le dispositif.

En variante, un certain nombre d'heuristiques sont appliquées à l'étape 122 à l'historique des résultats de classification pour lever ou non une alerte signalant l'usage d'un protocole interdit. Une heuristique consiste ainsi par exemple à ne pas lever d'alerte si l'indice de confiance sur la classification est inférieur à un seuil prédéterminé, ou si l'hôte dont il s'agit a toujours eu un comportement irréprochable auparavant, c'est-à-dire qu'il s'agit d'une première détection d'un flux encapsulant un protocole non autorisé depuis ou vers ce rôle.

L'application de ces heuristiques à l'étape 124 génère un rapport d'analyse, mis à jour en temps réel, contenant les alertes levées et leur niveau de criticité. Ce rapport peut être mis au format *Syslog* par exemple, pour des raisons d'interopérabilités.

**Revendications**

**1.** Procédé d'identification d'un protocole à l'origine d'un flux de paquets comportant les étapes suivantes :

- une capture (102) du flux du protocole à identifier,
- une classification statistique du flux, comprenant une extraction des paramètres de classification et une comparaison des paramètres de classification à des modèles statistiques construits lors d'une phase d'apprentissage,

**caractérisé en ce que** la classification statistique comporte :

- une première phase (108) de classification statistique globale comprenant une étape (114) d'extraction de paramètres globaux de classification calculés par application de formules statistiques sur une partie ou l'intégralité du flux, et une étape (114) de traitement des paramètres globaux de classification à partir d'un modèle statistique construit lors d'une phase d'apprentissage ;
- une seconde phase (110) de classification séquentielle comprenant une étape (116) d'extraction de paramètres séquentiels de classification représentatifs de l'enchaînement temporel de paquets constituant le flux, et une étape (118) de traitement des paramètres séquentiels de classification à partir d'un modèle statistique construit lors d'une phase d'apprentissage ; et

- une étape (120) de synthèse des résultats des première et seconde phases de classification (108, 110) pour identifier le protocole à l'origine du flux.

2. Procédé selon la revendication 1, **caractérisé en ce que** l'étape (114) de traitement des paramètres globaux de classification à partir de modèles statistiques construits lors d'une phase d'apprentissage comprend la mise en oeuvre de l'algorithme Ramdom Forest.

3. Procédé selon la revendication 1 ou 2, **caractérisé en ce que** les paramètres globaux de classification comportent au moins un paramètre parmi :

   • le nombre de paquets transmis, sens client→serveur ;
   • le nombre d'octets transmis, sens client→serveur;
   • la taille moyenne des paquets IP, sens client→serveur ;
   • la taille maximale des paquets IP, sens client→serveur ;
   • le temps d'inter arrivées minimum entre deux paquets IP, sens client→serveur ;
   • le temps d'inter arrivées maximum entre deux paquets IP, sens client→serveur ;
   • le nombre d'octets transmis, sens serveur->client ;
   • la taille maximale des paquets IP, sens serveur->client ;
   • la variance de la taille des paquets IP, sens serveur→client ; et
   • le ratio nombre octets montants/nombre total octets échangés.

4. Procédé selon l'une quelconque des revendications précédentes, **caractérisé en ce que** l'étape (118) de traitement des paramètres séquentiels de classification à partir de modèles statistiques construits lors d'une phase d'apprentissage comprend la mise en oeuvre de modèles de Markov Caché.

5. Procédé selon la revendication 4, **caractérisé en ce que** la phase d'apprentissage comporte une étape de construction d'un modèle de Markov caché pour chaque protocole identifiable et **en ce que** l'étape (118) de traitement comporte la détermination du modèle de Markov caché dont la probabilité que le flux ait été émis par le protocole associé est la plus grande.

6. Procédé selon l'une quelconque des revendications précédentes, **caractérisé en ce que** les paramètres séquentiels de classification comprennent au moins un paramètre parmi la taille du paquet et le temps inter-paquets.

7. Procédé selon l'une quelconque des revendications précédentes, **caractérisé en ce que** l'étape (120) de synthèse des résultats comprend l'application de la formule de Bayes pour fournir la probabilité de l'existence d'un protocole

$$p''_i = \frac{\sum_{k=1}^{n} p_k\, p(i\,|\,k) + \sum_{k=1}^{n} p'_k\, p'(i\,|\,k)}{2}$$

où

Etant donné un flux F et un ensemble de protocoles possibles $[a_1 ... a_n]$, $p_i$ et $p'_i$ représentent respectivement la probabilité que F appartienne au protocole $a_i$ selon la méthode *RandomForest* mise en oeuvre dans la phase (108) et selon la méthode du banc de modèles de Markov cachés mise en oeuvre dans la phase (110).

   • $p''_i$ est la probabilité fusionnée que *F* appartienne au protocole $a_i$ ;
   • $p(i/k)$ (respectivement $p'(i/k)$ est la probabilité que le flux appartienne au protocole $a_i$ sachant que la première phase de classification (108), respectivement la seconde phase de classification (110), a classé le flux comme appartenant au protocole $a_k$.

8. Procédé selon l'une quelconque des revendications précédentes, **caractérisé en ce qu'**il comporte, à l'issue de l'étape de synthèse, une étape (122) de filtrage supplémentaire.

9. Procédé selon la revendication 8, **caractérisé en ce que** l'étape de filtrage comprend la prise en compte de l'historique des résultats suivant une heuristique prédéterminée.

**10.** Installation d'identification d'un protocole à l'origine d'un flux de paquets comportant :

- des moyens de capture du flux du protocole à identifier,
- des moyens de classification statistique du flux, comprenant des moyens d'extraction des paramètres de classification et des moyens de comparaison des paramètres de classification à des modèles statistiques construits lors d'une phase d'apprentissage,

**caractérisée en ce que** les moyens de classification statistique comportent :

- des premiers moyens de classification statistique globale comprenant des moyens d'extraction de paramètres globaux de classification calculés par application de formule statistique sur une partie ou l'intégralité du flux, et des moyens de traitement des paramètres globaux de classification à partir d'un modèle statistique construit lors d'une phase d'apprentissage ;
- des seconds moyens de classification séquentielle comprenant des moyens d'extraction de paramètres séquentiels de classification représentatifs de l'enchaînement temporel de paquets constituant le flux, et des moyens de traitement des paramètres séquentiels de classification à partir d'un modèle statistique construit lors d'une phase d'apprentissage ; et
- des moyens de synthèse des résultats des premiers et seconds moyens de classification pour identifier le protocole à l'origine du flux.

## Patentansprüche

**1.** Verfahren zum Identifizieren eines am Anfang eines Paketstroms stehenden Protokolls, die folgenden Schritte umfassend:

- ein Erfassen (102) des Stroms des zu identifizierenden Protokolls,
- eine statistische Klassifikation des Stroms, umfassend eine Extraktion von Klassifikationsparametern und einen Vergleich der Klassifikationsparameter mit statistischen Modellen, die während einer Lernphase aufgebaut wurden,

**dadurch gekennzeichnet, dass** die statistische Klassifikation umfasst:

- eine erste, globale statistische Klassifikationsphase (108), umfassend einen Extraktionsschritt (114) für globale Klassifikationsparameter, die durch Anwenden statistischer Formeln auf einen Teil oder die Gesamtheit des Stroms berechnet wurden, und einen Verarbeitungsschritt (114) für die globalen Klassifikationsparameter ausgehend von einem statistischen Modell, das während einer Lernphase aufgebaut wurde;
- eine zweite, sequentielle Klassifikationsphase (110), umfassend einen Extraktionsschritt (116) für sequentielle Klassifikationsparameter, die für die zeitliche Verkettung von den Strom bildenden Paketen repräsentativ sind, und einen Verarbeitungsschritt (118) für die sequentiellen Klassifikationsparameter ausgehend von einem statistischen Model, das während einer Lernphase aufgebaut wurde; und
- einen Syntheseschritt (120) für die Ergebnisse der ersten und zweiten Klassifikationsphase (108, 110), um das am Anfang der Stroms stehende Protokoll zu identifizieren.

**2.** Verfahren nach Anspruch 1, **dadurch gekennzeichnet, dass** der Verarbeitungsschritt (114) für die globalen Klassifikationsparameter ausgehend von statistischen Modellen, die während einer Lernphase aufgebaut wurden, die Umsetzung eines Random Forest-Algorithmus umfasst.

**3.** Verfahren nach Anspruch 1 oder 2, **dadurch gekennzeichnet, dass** die globalen Klassifikationsparameter mindestens einen Parameter umfassen aus:

- der Anzahl von in Richtung Client $\rightarrow$ Server übertragenen Paketen;
- der Anzahl von in Richtung Client $\rightarrow$ Server übertragenen Achtbitzeichen;
- der mittleren Größe der IP-Pakete in Richtung Client -> Server;
- der maximalen Größe der IP-Pakete in Richtung Client -> Server;
- der minimalen Zwischenankunftszeit zwischen zwei IP-Paketen in Richtung Client -> Server;
- der maximalen Zwischenankunftszeit zwischen zwei IP-Paketen in Richtung Client -> Server;
- der Anzahl von in Richtung Server -> Client übertragenen Achtbitzeichen;

• der maximalen Größe der IP-Pakete in Richtung Server → Client;
• der Varianz der Größe der IP-Pakete in Richtung Server → Client; und
• dem Verhältnis der Anzahl von Uplink-Achtbitzeichen/Gesamtanzahl ausgetauschter Achtbitzeichen.

4. Verfahren nach einem der vorhergehenden Ansprüche, **dadurch gekennzeichnet, dass** der Verarbeitungsschritt (118) für die sequentiellen Klassifikationsparameter ausgehend von statistischen Modellen, die während einer Lernphase aufgebaut wurden, die Umsetzung von Hidden Markov Modellen umfasst.

5. Verfahren nach Anspruch 4, **dadurch gekennzeichnet, dass** die Lernphase einen Aufbauschritt eines Hidden Markov Modells für jedes identifizierbare Protokoll umfasst, und dass der Verarbeitungsschritt (118) die Bestimmung des Hidden Markov Modells umfasst, dessen Wahrscheinlichkeit, dass der Strom durch das dazugehörige Protokoll ausgelöst wurde, am höchsten ist.

6. Verfahren nach einem der vorhergehenden Ansprüche, **dadurch gekennzeichnet, dass** die sequentiellen Klassifikationsparameter mindestens einen Parameter aus der Paketgröße und der Zwischenpaketzeit umfassen.

7. Verfahren nach einem der vorhergehenden Ansprüche, **dadurch gekennzeichnet, dass** der Syntheseschritt (120) der Ergebnisse die Anwendung der Bayes-Formel umfasst, um die Wahrscheinlichkeit für die Existenz eines Protokolls zu liefern

$$p''_i = \frac{\sum_{k=1}^{n} p_k\, p(i\,|\,k) + \sum_{k=1}^{n} p'_k\, p'(i\,|\,k)}{2}$$

worin

ein Strom F und eine Gruppe möglicher Protokolle [$a_1$ ... $a_n$], $p_1$ und $p'_i$ jeweils die Wahrscheinlichkeit darstellen, dass F zum Protokoll $a_i$ nach dem in der Phase (108) umgesetzten Random Forest-Verfahren und nach dem in der Phase (110) umgesetzten Verfahren der Reihe der Hidden Markov Modelle gehört,

• $p''_i$ die vereinigte Wahrscheinlichkeit ist, dass F zum Protokoll $a_i$ gehört;
• $p(i|k)$ (bzw. $p'(i|k)$) die Wahrscheinlichkeit ist, dass der Strom zum Protokoll $a_i$ gehört, wissend dass die erste Klassifikationsphase (108) bzw. die zweite Klassifikationsphase (110) den Strom als zum Protokoll $a_k$ gehörend eingestuft hat.

8. Verfahren nach einem der vorhergehenden Ansprüche, **dadurch gekennzeichnet, dass** es am Ende der Synthesephase einen zusätzlichen Filterungsschritt (122) umfasst.

9. Verfahren nach Anspruch 8, **dadurch gekennzeichnet, dass** der Filterungsschritt die Berücksichtigung der Historie der Ergebnisse gemäß einer vorbestimmten Heuristik umfasst.

10. Anlage zum Identifizieren eines am Anfang eines Paketstroms stehenden Protokolls, umfassend:

- Einrichtungen zum Erfassen des Stroms des zu identifizierenden Protokolls,
- Einrichtungen zur statistischen Klassifikation des Stroms, umfassend Extraktionseinrichtungen für Klassifikationsparameter und Einrichtungen zum Vergleichen der Klassifikationsparameter mit statistischen Modellen, die während einer Lernphase aufgebaut wurden,

**dadurch gekennzeichnet, dass** die Einrichtungen zur statistischen Klassifikation umfassen:

- erste Einrichtungen zur globalen statistischen Klassifikation, die Extraktionseinrichtungen für globale Klassifikationsparameter, die durch Anwenden einer statistischen Formel auf einen Teil oder die Gesamtheit des Stroms berechnet wurden, und Einrichtungen zur Verarbeitung der globalen Klassifikationsparameter ausgehend von einem statistischen Modell umfassen, das während einer Lernphase aufgebaut wurde;
- zweite Einrichtungen zur sequentiellen Klassifikation, die Einrichtungen zur Extraktion sequentieller Klassifikationsparameter, die für die zeitliche Verkettung von den Strom bildenden Paketen repräsentativ sind, und Verarbeitungseinrichtungen für die sequentiellen Klassifikationsparameter ausgehend von einem statistischen Modell umfassen, das während einer Lernphase aufgebaut wurde; und
- Einrichtungen zur Synthese der Ergebnisse der ersten und zweiten Klassifikationseinrichtungen um das am Anfang des Stroms stehende Protokoll zu identifizieren.

**Claims**

1. A method for identifying a protocol at the origin of a flow of packets including the following steps:

   - capture (102) of the flow of the protocol to be identified,
   - statistical classification of the flow, comprising an extraction of classification parameters and a comparison of the classification parameters with statistical models constructed during a learning phase,

   **characterized in that** the statistical classification includes:

   - a first global statistical classification phase (108) comprising a step (114) for extracting global classification parameters calculated by applying statistical formulae on part or all of the flow, and a step (114) for processing the global classification parameters from a statistical model constructed during a learning phase;
   - a second sequential classification phase (110) comprising a step (116) for extracting sequential classification parameters representative of the time sequence of packets forming the flow, and a step (118) for processing sequential classification parameters from a statistical model constructed during a learning phase; and
   - a step (120) for summarizing the results of the first and second classification phases (108, 110) for identifying the protocol at the origin of the flow.

2. The method according to claim 1, **characterized in that** the step (114) for processing the global classification parameters from statistical models constructed during a learning phase comprises the application of the Random-Forest algorithm.

3. The method according to claim 1 or 2, **characterized in that** the global classification parameters include at least one parameter from:

   • the number of transmitted packets, in the client>server direction;
   • the number of transmitted bytes in the client>server direction;
   • the average size of the IP packets, in the client>server direction;
   • the maximum size of the IP packets, in the client>server direction;
   • the minimum time between arrivals of two IP packets, in the client>server direction;
   • the maximum time between arrivals of two IP packets, in the client>server direction;
   • the number of transmitted bytes, in the server>client direction;
   • the maximum size of the IP packets, in the server>client direction;
   • the variance of the size of the IP packets, in the server>client direction; and
   • the ratio of number of upflowing bytes divided by total number of exchanged bytes.

4. The method according to any one of the preceding claims, **characterized in that** the step (118) for processing the sequential classification parameters from statistical models constructed during a learning phase comprises the application of hidden Markov models.

5. The method according to claim 4, **characterized in that** the learning phase includes a step for constructing a hidden Markov model for each identifiable protocol and **in that** the processing step (118) includes the determination of the hidden Markov model for which the probability that the flow has been emitted by the associated protocol is the largest.

6. The method according to any one of the preceding claims, **characterized in that** the sequential classification parameters comprise at least one parameter from the size of the packet and the time between the packets.

7. The method according to any one of the preceding claims, **characterized in that** the step (120) for summarizing the results comprises the application of Bayes formula for providing the probability of the existence of a protocol

$$p''_i = \frac{\sum_{k=1}^{n} p_k\, p(i\mid k) + \sum_{k=1}^{n} p'_k\, p'(i\mid k)}{2}$$

wherein

given a flow F and a set of possible protocols $[a_1... a_n]$, $p_i$ and $p'_i$ respectively represent the probability that F belongs to the protocol $a_i$ according to the *RandomForest* method applied in phase (108) and according to the method of the bench of hidden Markov models applied in phase (110),

- $p''_i$ is the merged probability that *F* belongs to the protocol $a_i$;
- *p(i/k),* respectively *p'(i/k),* is the probability that the flow belongs to protocol $a_i$ being aware that the first classification phase (108), the second classification phase (110) respectively, has classified the flow as belonging to the protocol $a_k$.

8. The method according to any one of the preceding claims, **characterized in that** it includes, at the end of the synthesis step, an additional filtering step (122).

9. The method according to claim 8, **characterized in that** the filtering step comprises the taking into account of the history of the results following a predetermined heuristic.

10. An installation for identifying a protocol of the origin of a flow of packets including:

- means for capturing the flow of the protocol to be identified,
- means for statistical classification of the flow, comprising means for extracting the classification parameters and means for comparing the classification parameters with statistical models constructed during a learning phase,

**characterized in that** the statistical classification means include:

- first global statistical classification means comprising means for extracting global classification parameters calculated by applying statistical formulas on part or all of the flow, and means for processing the global classification parameters from a statistical model constructed during a learning phase;
- second sequential classification means comprising means for extracting sequential classification parameters representative of the time sequence of packets forming the flow, and means for processing the sequential classification parameters from a statistical model constructed during a learning phase; and
- means for summarizing the results of the first and second classification means in order to identify the protocol at the origin of the flow.

FIG.1

EP 2 548 337 B1

FIG.2

param.4>5,5 ?

Oui          Non

param.8>0,1 ?          param.2>91,6 ?

Oui          Non          Oui          Non

HTTP          P2P          SSH          param.1>10,1 ?

Oui          Non

HTTP          TELNET

## FIG.3

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009021892 A1

**Littérature non-brevet citée dans la description**

- **N. WILLIAMS ; S. ZANDER ; G. ARMITAGE.** A preliminary performance comparison of five machine learning algorithms for practical IP traffic flow classification. *ACM SIGICOMM'06,* 2006
- Online Classification of Network Flows. **MAHBOD TAVALLAEE et al.** COMMUNICATION NETWORKS AND SERVICES RESEARCH CONFERENCE, 2009. CNSR '09. SEVENTH ANNUAL, IEEE. 11 Mai 2009, 78-85
- Using GMM and SVM-Based Techniques for the Classification of SSH-Encrypted Traffic. **DUSI M et al.** COMMUNICATIONS, 2009. ICC '09. IEEE INTERNATIONAL CONFERENCE ON, IEEE, PISCATAWAY, NJ, USA. 14 Juin 2009, 1-6
- **L. BREIMAN.** Random Forests. *Machine Learning,* 2001, vol. 45 (1), 5-32
- **L.R. RABINER.** A turorial on Hidden Markov Models and selected applications in speech recognition. *Proceedings of the IEEE,* 1989, vol. 77 (2), 257-286